# EUROPEAN PATENT SPECIFICATION

(11) **EP 0 484 150 B1**
(45) Date of publication and mention of the grant of the patent: **01.03.1995**
(21) Application number: 91310052.5
(22) Date of filing: 31.10.1991
(51) Int. Cl.: B65G 47/84

(54) **Conveying system**
Fördersystem
Systèmes de transport

(30) Priority: 31.10.1990 US 606585
(43) Date of publication of application: 06.05.1992
(73) Proprietor: RAPISTAN DEMAG CORP., Grand Rapids, Michigan 49505 (US)
(72) Inventor: Cotter, David H., Coopersville, Michigan 49404 (US); Woltjer, Bernard H., Jenison, Michigan 49428 (US); LeMay, Curtis E., Shelbyville, Michigan 49344 (US)
(74) Representative: Robinson, Anthony John Metcalf

(56) References cited:
- EP-A- 0 444 734
- FR-A- 2 388 737
- US-A- 3 987 888
- US-A- 4 711 341

## Description

This invention relates to a conveyor system and in particular to a positive displacement sortation system in which diverting shoes travelling with the conveyor surface laterally divert packages onto selected spur lines.

Positive displacement sortation systems, such as the type described in US-A-4738347 have long been known. Such a system includes a pair of endless chains and a plurality of slats connected at opposite ends to the chains in order to provide a moving conveyor surface. A diverting shoe is mounted to each slat in a manner that the shoe may glide across the slat. Movement of the shoes is effected by a guide pin and coaxial bearing, depending from the shoe, which engage a network of guide tracks beneath the conveying surface. At the loading end of the sortation system, the shoes all have a particular orientation to one side of the packages. When a package is to be diverted to a spur, a diverter switch is actuated to switch the guide pins for the shoes adjacent the package onto a diagonal track which causes the affected shoes to glide across the slats to divert the package.

The diverting motion applies reaction forces to the shoes tending to rotate the shoes about their vertical axes as well as about the long axes of the slats. These forces, of course, increase with heavier packages and those having a high coefficient of friction with the slats. These difficulties are aggravated by a desire to provide ever-increasing line speeds, which require greater ease of gliding between the shoe and the slats. Efforts to provide structural support to resist the reactive forces tend to be at odds with ease of glide.

According to the present invention, a conveying system has a longitudinally moving conveying surface defined by the uppermost surfaces of a plurality of slats connected in spaced relation with each other in an endless web; a plurality of diverter shoes each moveably mounted on one of the slats for lateral movement with respect to the conveying surface; and track means engaging the diverter shoes for imparting a lateral force to move the diverter shoes laterally to displace product positioned on the conveying surface, characterised in that each of the slats is defined by a wall formed as a cylinder including an outer surface having a planar upper portion defining the conveying surface, and each of the diverter shoes has a support portion including a substantially continuous glide surface surrounding the said wall entirely, the glide surface having substantially the same configuration as the outer surface of the slat.

The present invention thus provides a sortation system which is capable of very high line speeds without excessive line noise and in which the diverter shoes are capable of rapid and smooth gliding along the slats while resisting reactionary forces. Preferably the diverter shoes are modular having interchangeable upper diverting portions for use with right-hand, left-hand and bi-lateral divert systems and which have a profile that reduces the potential for package jamming.

In a preferred construction, the invention is embodied in a sortation system in which each of the slats is defined by a wall having a planar upper portion that defines the conveyor surface in combination with diverter shoes having a support portion including a substantially continuous glide surface that surrounds the slat and has substantially the same configuration as the outer surface of the slat. Preferably, the slat has a parallelogram cross-section and bearing means are defined between at least one edge of each slat and an engaging portion of the glide surface of the diverter shoe. The bearing means is provided by an enlarged radius surface at the slat edge. Such bearing means are preferable provided at diagonally opposite slat edges in order to better resist reaction forces about the axis of the slat.

A lateral stabilizing means is additionally provided between each slat and an engaging portion of the glide surface of the corresponding diverter shoe in order to resist vertical axis reaction forces. The lateral stabilizing means is preferably a T-shaped outward extension of one portion of the slat engaging a mating portion of the shoe glide surface.

Preferably, the diverting member of the diverter shoe includes one or crore substantially vertical diverting surfaces on a lateral end of the member. A plurality of contiguous, generally planar surfaces slope downwardly from the upper extent of this diverting surface laterally inward and longitudinally forward and rearward on the diverting member. This configuration provides a profile with a greatly reduced tendency to jam packages. The diverting surface is on opposite sides of the diverting member for right-hand and left-hand diverting systems and two such vertical diverting surfaces are provided for a bi-directional divert system.

Each of the support member and the diverting member may be defined by a multiplicity of interconnected wall segments having substantially the same thickness and arranged in a honeycomb. Thus, the members may be provided with exceptional strength and may be moulded of a polymeric material. This imparts both a light-weight design and an anti-friction engagement with the slat for ease of glide.

The invention may be carried into practice in various ways and one conveyor system and a number of diverter shoes constructed in accordance with the invention will now be described by way of example with reference to the accompanying drawings, in which:
Fig. 1 is a plan view of the sortation system;
Fig. 2 is a sectional view taken along the lines II-II in Fig. 1;
Fig. 3 is an enlarged elevation of one of the slats of the system;
Fig. 4 is a perspective view taken from the top left front of a bi-directional diverting member;
Fig. 5 is a perspective view taken from the top left front of a right-hand diverting member;
Fig. 6 is a perspective view taken from the top left front of a left-handed diverting member;
Fig. 7 is a perspective view taken from the bottom right rear of the diverting member illustrated in Fig. 4;
Fig. 8 is a perspective view taken from the top left front of a support member;
Fig. 9 is a perspective view taken from the bottom left rear of the support member illustrated in Fig. 8 with the roller bearing removed to reveal additional portions of the support member;
Fig. 10 is a left side elevation showing the joining of a diverting member with a support member;
Fig. 11 is a perspective view taken from the top left front of the support member in Figs. 8 and 9;
Fig. 12 is an elevation taken along the lines XII-XII in Fig. 1; and
Fig. 13 is a plan view taken along the lines XIII-XIII in Fig. 12.

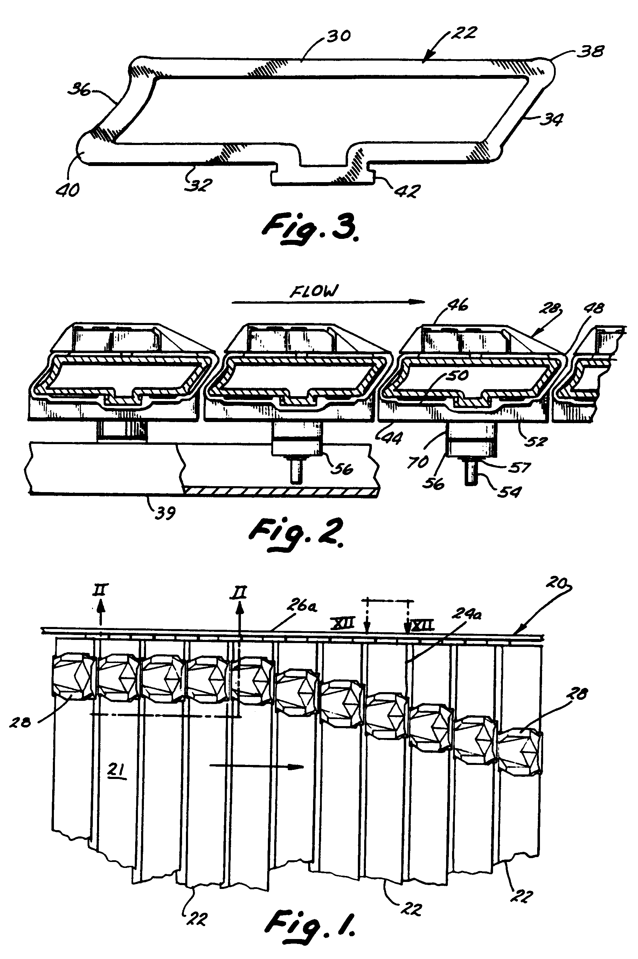

Referring now specifically to the drawings, and the illustrated embodiments depicted therein, a sortation system 20 includes a plurality of slats 22, each having a first end 24a attached to an endless chain 26a and a second end attached to a second endless chain (not shown). A diverter shoe 28 is mounted to each slat 22 for gliding movement laterally along the length of the slat (Figs. 1 and 2). Movement of the shoe is guided by a network of guide tracks 39 engaging a bearing 56 and changes in direction of movement are initiated by a diverter switch (not shown) engaging a diverter pin 54.

Slat 22 includes an upper wall 30, a lower wall 32, an upwardly forwardly sloping front wall 34 and rear wall 36 (Fig. 3). The slat 22 is thus quadrilateral in cross-section in a manner which defines a parallelogram having parallel upper and lower walls and parallel forward and rear walls. Slat 22 is a right-cylinder and, in the preferred embodiment, is an extrusion, preferably an aluminium extrusion. Forward wall 34 joins upper wall 30 at an enlarged radius corner 38. Rear wall 36 joins lower wall 32 at an enlarged radius corner 40. A T-shaped extension 42 projects downwardly from bottom wall 32.

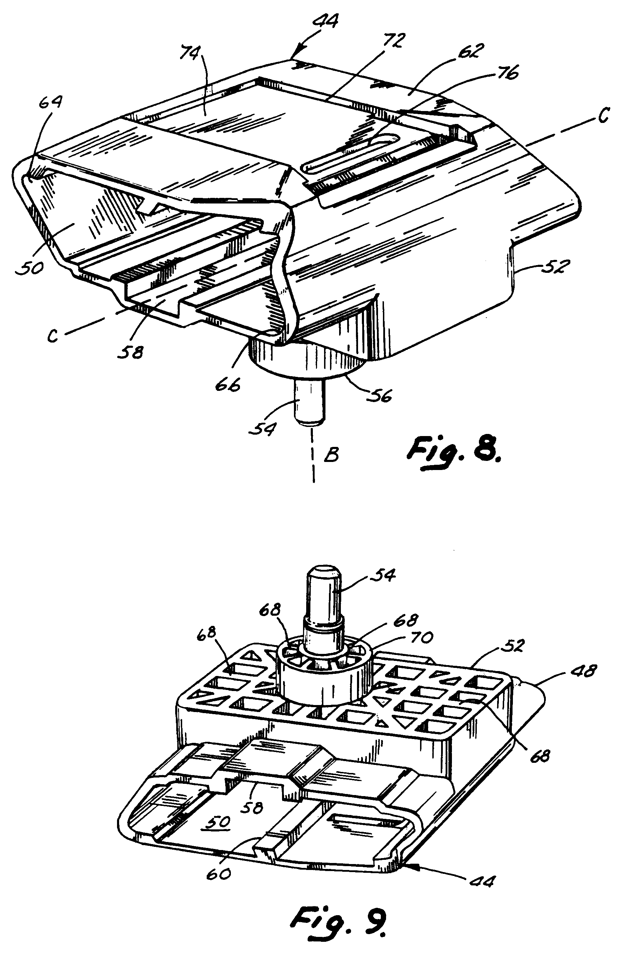

Each diverting shoe 28 includes a support member 44 (Fig. 8) and a diverting member 46 mounted to the support member (Fig. 2). Support member 44 includes a glide portion 48 having a continuous glide surface 50 having substantially the same configuration as the outer surface of slat 22 for gliding movement along the slat. Guide portion 48 additionally includes a base 52 having a cylindrical projection 70 which mounts a diverter pin 54 and coaxial bearing 56 by frictional engagement of the diverter pin in an opening defined in projection 70. The bearing is rotated on an enlarged base of the diverter pin and held in place by a c-clip 57. Continuous surface 50 includes a channel 58 surrounding projection 42 of the slat such that the projection rides within the channel (Figs. 8, 9 and 11). Continuous surface 50 additionally includes a support rib 60 which engages top wall 30 of the slat to support an upper wall 62 of the support member. Continuous surface 50 additionally includes an enlarged radius forward upper corner 64 and an enlarged radius lower rear corner 66, in which enlarged radius corners 38 and 40 of the slat, respectively, ride. This arrangement provides bearing engagement between the enlarged radius corners of the slat and the corresponding corners of surface 50 to resist reaction forces tending to rotate the shoes about the axis of elongation of the slat.

Base 52 is a honey-comb structure made up of a multiplicity of wall segments 68 which all have a common wall thickness and substantially the same wall thickness as the other walls of guide portion 48 to ensure uniform cure of all walls. A cylindrical projection 70, which has a honey-comb structure similar to that of base 52, extends from the base in order to support the bearing 56 and diverter pin 54. This structure also provides a break-away feature. If a diverter shoe jams for any reason, projection 70 will shear from the remainder of the base to avoid damage to expensive portions of the sortation system. Upper wall 62 includes an angled undercut 72 to define a recessed portion 74. Portion 74 includes a locking slot 76.

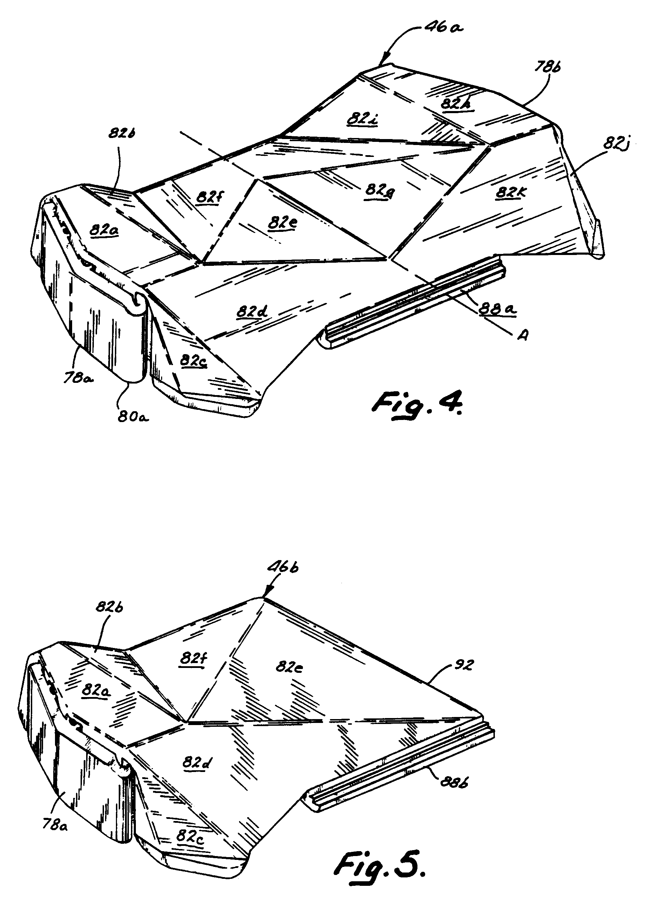

A diverting member 46a (Figs. 4 and 7) is provided that is designed for use in a bi-lateral diverting sortation system. Diverting member 46a includes a right vertical diverting surface 78a and a left vertical diverting surface 78b. Diverting surfaces 78a and 78b are covered with a high friction polymeric band 80a, 80b. A series of contiguous deflecting surfaces 82a, 82b, 82c, 82d, 82e, 82f, 82g, and 82h, 82i, 82j and 82k slope downwardly from diverting surfaces 78a, 78b toward the central axis A of diverting member 46a and forwardly and rearwardly with respect to the movement of the diverting member, which is in the direction of axis A. Therefore, a package striking any of the surfaces 82a-82k will be deflected progressively upwardly to a point where the upper extent of the vertical diverting surfaces 78a, 78b may pass beneath the package.

Diverting member 46a additionally includes a base 84 having a honey-comb shape defined by a multiplicity of interconnected wall segments 86. Wall segments 86 have a uniform wall thickness, which is substantially the same wall thickness as the wall defining deflection surfaces 82a-82k to ensure uniform cure of all walls. Base 84 additionally includes a projecting rib 88a, configured to engage angled undercut 72 and a locking tab 90 configured to engage locking slot 76 on the support member 44. In this manner, base 84 may be engaged with recessed portion 74 in a dovetail joint with locking members 76 and 90 securing the relationship until mechanically released.

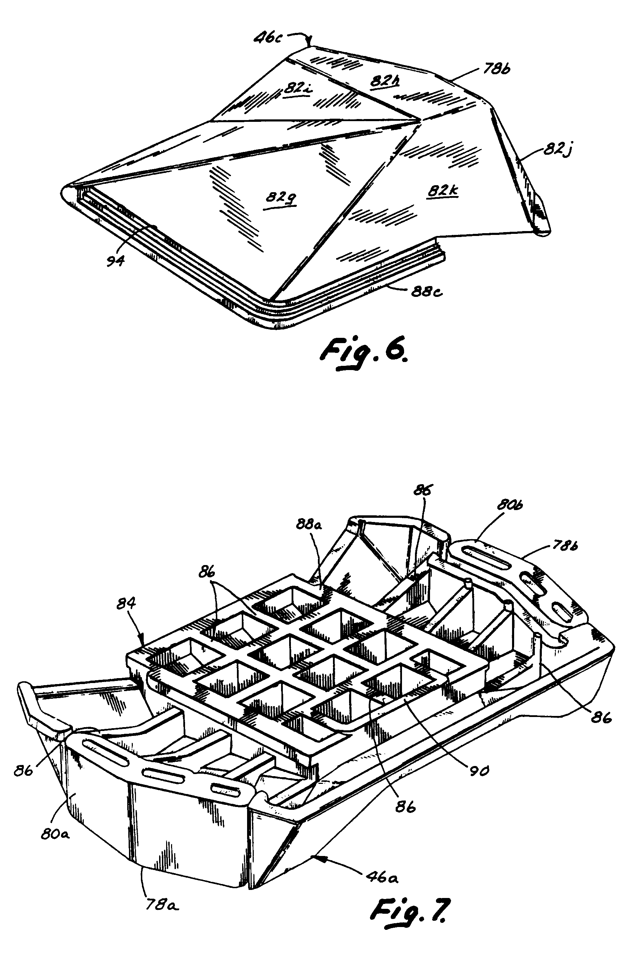

Right-handed diverting member 46b (Fig. 5) includes a single vertical divert surface 78a and a series of contiguous deflecting surfaces 82a, 82b, 82c, 82d, 82e and 82f. Surfaces 82a-82f are arranged in a similar fashion in the right-handed diverting member as in the bi-directional diverting member except that the slope is from diverting surface 78a to the laterally opposite side 92 of the diverting member 46b. Right-handed diverting member 46b further includes a rib 88b which engages angled undercut 72 and a locking tab (not shown) to engage locking slot 76 of the support member to mount the right-handed diverting member interchangeably with the bi-directional diverting member 46a. Left-handed diverting member 46c (Fig. 6) only has vertical diverting surface 78b and contiguous deflecting surfaces 82g-82k which slope downwardly away from vertical surface 78b toward opposite lateral side 94. Diverting member 46c includes a rib 88c to engage angled undercut 72 of support member 44 and a lcoking tab (not shown) to engage locking slot 76.

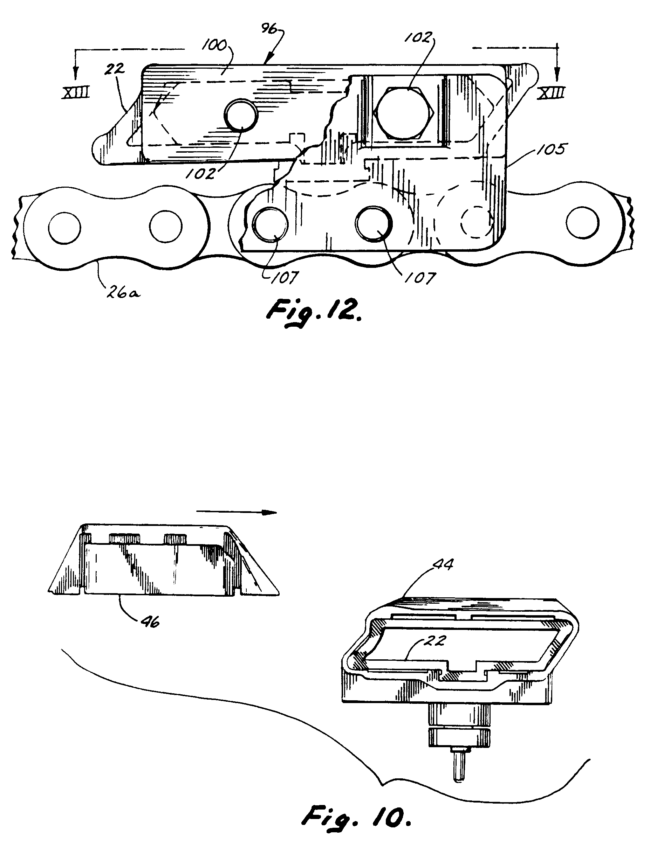

Sortation system 20 is assembled by providing the appropriate diverting member 46a-46c for a bi-directional diverting system, a right-handed diverting system or a left-handed diverting system, respectively, and by sliding the diverting member onto the support member as illustrated in Fig. 10.

When the diverting shoes are assembled in this manner and mounted to the slats 22, the T-shaped projections 42 on the slats engage channel 58 of the support member 44 in order to provide a lateral stabilizer to resist vertical-axis reaction forces applied about axis B to the diverting shoe 28 (see Fig. 8). The structure of the T-shaped projection 42 is to prevent wedging of the shoe by providing an approximate 5:1 length-to-width ratio for the interface with channel 58. A definite clearance is provided between the bottom of projection and the bottom of channel 58 for debris tolerance. The bearings defined between enlarged radius corners 38 and 40 of the slats and corners 64 and 66 of the support members resist reaction forces about the long axis C of the slats (see Fig. 8). However, the bearings defined between the enlarged radius corners of the slat and support member allow easy gliding of the diverting shoe along the slat. The parallelogram configuration of the slat and diverter shoe provides overlap between slats in order to reduce gaps in the conveying surface 21 of the sortation system.

In a preferred embodiment, guide portion 48 of the support member and diverting members 46 are moulded from a polymeric material. This is facilitated by the substantially uniform thickness walls used throughout the members which ensure proper curing of all wall segments. In places where exceptional strength is required, such as in bases 52 and 84, wall segments are arranged in a honey-comb fashion. In a most preferred embodiment, guide portion 48 and diverting member 46 have wall segments which have a thickness of approximately 3.175 mm (1/8 inch) and are moulded from acetal copolymer. Such acetal copolymer is commercially available and is marketed by Celanese Corporation under the designation Celcon Acetal Copolymer LW90, which is a bearing grade material. However, other polymeric materials could be used in the molding of the the diverting member guide portions of the support member.

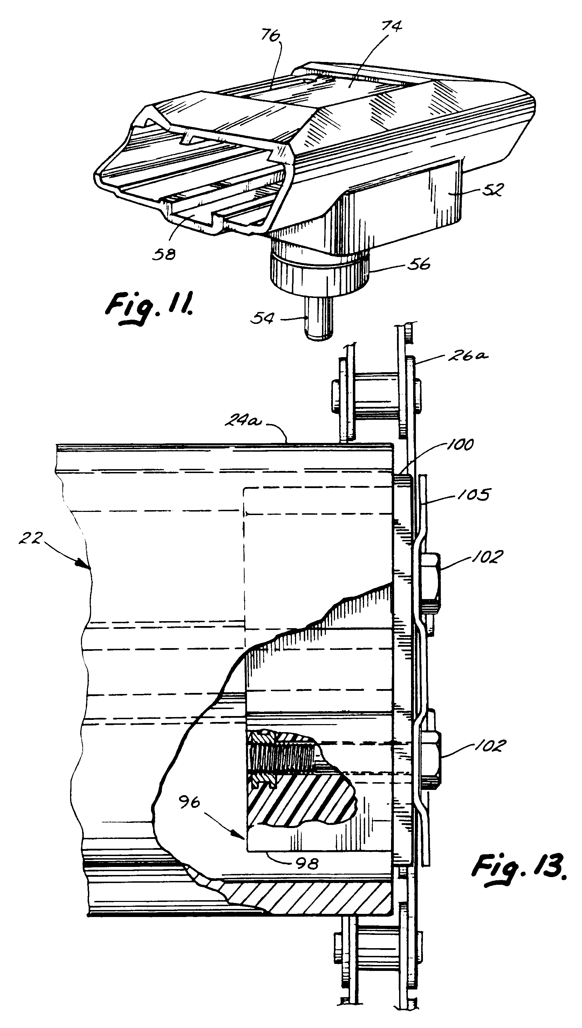

End portion 24a of each slat is mounted to chain 26a and the opposite end portion (not shown) is mounted to another endless chain by a mounting member 96 (Figs. 12 and 13). Mounting member 96 includes a compression-fitting portion 98 and a spacer portion 100. Compression fitting portion 98 has a diamond-shaped profile that is substantially conforming to the internal dimensions of slat 22, but which allows use on either end of the slats. Fasteners 102 extending through openings 104 in mounting bracket 105 engage threaded inserts 106 in compression fitting portion 98. The application of torque to fasteners 102 causes compression fitting 98 to expand thus frictionally engaging the inner wall surface of the slat. Mounting bracket 105 is supported by extended pins 107 of one chain link. Spacer portion 100 is configured to be larger in profile than the compression fitting portion 98 but no larger than the outer profile of the slat such that it does not interfere with packages being diverted from the slat. The combined compression fitting and spacer provides vibration-dampening isolation between the chain and the slat which imparts significant noise-reduction, which is very important at high line speeds. In the illustrated embodiment, line speeds of 150 to 167.5 m (500-550 feet) per minute are presently envisioned but could conceivably be greater. In the illustrated embodiment, mounting member 96 is moulded of Nitrile Rubber material, having a 60 durometer grade A throughout.

The modular slats and diverter shoes provided by the present invention are intended to be used in combination with a vertically-actuated diverter switch described in US-A-5308912.

## Claims

1. A conveying system (20) having a longitudinally moving conveying surface defined by the uppermost surfaces of a plurality of slats (22) connected in spaced relation with each other in an endless web; a plurality of diverter shoes (28) each moveably mounted on one of the slats (22) for lateral movement with respect to the conveying surface; and track means engaging the diverter shoes for imparting a lateral force to move the diverter shoes laterally to displace product positioned on the conveying surface, characterised in that each of the slats (22) is defined by a wall formed as a cylinder including an outer surface having a planar upper portion (30) defining the conveying surface, and each of the diverter shoes (28) has a support portion (44) including a substantially continuous glide surface (50) surrounding the said wall entirely, the glide surface having substantially the same configuration as the outer surface of the slat.

2. A conveying system according to claim 1 wherein the cylinder has a quadrilateral-shaped, preferably parallelogram-shaped, cross-section including one side (30) defining the planar upper portion.

3. A conveying system according to claim 1 or claim 2 wherein each of the slats (22) includes mounting means (96) for mounting the opposite ends of the said wall to the chains, the mounting means preferably including vibration dampening material between the wall and the chains and/or a compression fitting (98) for engaging an inner surface of the said wall.

4. A conveying system according to any of claims 1 to 3 wherein the glide surface is defined by an anti-friction material.

5. A conveying system according to any of claims 1 to 4 wherein each of the diverter shoes (28) includes a diverting portion (46) joined to the support portion, preferably by a dovetail joint (72,88).

6. A conveying system according to claim 5 wherein the diverting portions of the diverter shoes are defined by a multiplicity of joined wall segments (86) having substantially the same thickness and are preferably moulded of polymeric material, preferably acetal copolymer.

7. A conveying system according to claim 5 or 6 in which the diverting portion includes at least one substantially vertical diverting surface (78) on a lateral end thereof.

8. A conveying system as claimed in claim 6 or claim 7 in which the diverting portion (46) has a plurality of contiguous, generally planar surfaces (82a-k) sloping downward from an upper extent of the diverting surface laterally inward and longitudinally forward or rearward.

9. A conveying system according to claim 8 when dependent upon claim 7 having one said diverting surface (78a) and wherein the planar surfaces (82a-f) slope laterally inward to another lateral end of said diverting member opposite said diverting surface.

10. A conveying system according to claim 8 when dependent upon claim 7 having a pair of diverting surfaces (78a, 78b) on opposite lateral ends of the diverting member and wherein the planar surfaces (82a-k) slope laterally inward to a central portion of said diverting surface.

11. A conveying system according to any one of the preceding claims wherein the support portions of the diverter shoes are defined by multiplicity of joined wall segments (68) having substantially the same thickness and are preferably moulded of polymeric material, preferably acetal copolymer.

12. A conveying system according to any one of the preceding claims in which each of the slats is defined by a wall having generally planar upper and lower wall portions (30, 32) joined by side wall portions (34, 36) defining joining edges between each of said wall portions and which includes bearing means defining a bearing between at least one of the said joining edges of each of the slats and an engaging portion of said glide surface of the corresponding one of said diverter shoes.

13. A conveying system according to claim 12 wherein the bearing means includes means defining an enlarged radius surface (38, 40) at the said one of the said joining edges.

14. A conveying system according to claim 13 wherein the bearing means defines bearings (64, 66) between two opposite said joining edges and engaging portions of said glide surface.

15. A conveying system according to any one of the preceding claims which includes lateral stabilizing means (42, 58) between one of the wall portions of each of the slats and an engaging portion of the glide surface of the corresponding one of the diverter shoes, the lateral stabilizing means resisting vertical-axis reaction-force-couples.

16. A conveying system according to claim 15 wherein the lateral stabilizing means includes a T-shaped portion (42) extending from one of the wall portions and being slidably positioned in a slot (58) defined in the engaging portion of the glide surface.

17. A conveying system according to any one of the preceding claims wherein the support portion (44) includes a follower portion (54) adapted to be engaged by said track means and a base portion (52) including the glide surface for mounting the follower portion, the base portion being defined by a plurality of wall segments (68) arranged in a honey-comb manner.

## Patentansprüche

1. Fördersystem (20) mit einer sich in Längsrichtung bewegenden Förderfläche, die durch die obersten Flächen einer Vielzahl von Lamellen (22), die in beabstandeter Beziehung miteinander zu einer Endlosbahn verbunden sind, mit einer Vielzahl von Ablenkschuhen (28), die jeweils bewegbar auf einem der Lamellen (22) für die seitliche Bewegung mit Bezug auf die Förderfläche angeordnet sind, und mit Schienenmitteln, die in Eingriff mit den Ablenkschuhen zur Erteilung einer seitlichen Kraft kommen, um die Ablenkschuhe seitlich zu bewegen, um das sich auf der Förderfläche befindliche Produkt seitlich zu verschieben, dadurch gekennzeichnet, daß jede der Lamellen (22) durch eine Wand begrenzt ist, die als Zylinder ausgebildet ist, der eine Außenfläche mit einem planaren oberen Bereich (30) aufweist, der die Förderfläche bildet, und jeder der Ablenkschuhe (28) einen Stützbereich (44) aufweist, der eine im wesentlichen durchgehende Gleitfläche (50) aufweist, die die Wand vollständig umgibt, wobei die Gleitfläche im wesentlichen die gleiche Konfiguration aufweist wie die Außenfläche der Lamelle.

2. Fördersystem nach Anspruch 1, **dadurch gekennzeichnet, daß** der Zylinder einen vierseitig geformten, vorzugsweise parallelogrammartig geformten Querschnitt aufweist, wobei eine Seite (30) einen planaren oberen Bereich bildet.

3. Fördersystem nach Anspruch 1 oder 2, **dadurch gekennzeichnet, daß** jede der Lamellen (22) Befestigungsmittel (96) aufweist, um die entgegengesetzten Enden der Wand an den Ketten zu befestigen, wobei die Befestigungsmittel vorzugsweise Vibrationsdämpfungsmaterial zwischen der Wand und den Ketten und/oder ein Kompressionspaßteil (98) zur Berührung einer Innenfläche der Wand umfassen.

4. Fördersystem nach einem der Ansprüche 1 bis 3, **dadurch gekennzeichnet, daß** die Gleitfläche durch ein Gleitlagermaterial gebildet ist.

5. Fördersystem nach einem der Ansprüche 1 bis 4, **dadurch gekennzeichnet, daß** jeder der Ablenkschuhe (28) einen Ablenkbereich (46) umfaßt, der mit dem Stützbereich vorzugsweise durch eine Schwalbenschwanzverbindung (72, 88) verbunden ist.

6. Fördersystem nach Anspruch 5, **dadurch gekennzeichnet, daß** die Ablenkbereiche der Ablenkschuhe durch eine Vielzahl von verbundenen Wandsegmenten (86) mit im wesentlichen der gleichen Dicke gebildet sind und vorzugsweise aus polymerem Material, vorzugsweise Acetalcopolymer, geformt sind.

7. Fördersystem nach Anspruch 5 oder 6, **dadurch gekennzeichnet, daß** der Ablenkbereich mindestens eine im wesentlichen vertikale Ablenkfläche (78) an einem seitlichen Ende davon umfaßt.

8. Fördersystem nach Anspruch 6 oder 7, **dadurch gekennzeichnet, daß** der Ablenkbereich (46) eine Vielzahl von aneinandergrenzenden, im wesentlichen planaren Oberflächen 82a-k) aufweist, die nach unten von einem oberen Bereich der Ablenkfläche seitlich nach innen und in Längsrichtung nach vorne oder hinten geneigt sind.

9. Fördersystem nach Anspruch 8 in Abhängigkeit von Anspruch 7 mit einer Ablenkfläche (78a), wobei die planaren Flächen (82a-f) seitlich nach innen zu einem anderen seitlichen Ende des Ablenkelements gegenüber der Ablenkfläche geneigt sind.

10. Fördersystem nach Anspruch 8 in Abhängigkeit von Anspruch 7 mit einem Paar Ablenkflächen (78a, 78b) an gegenüberliegenden seitlichen Enden des Ablenkelements, wobei die planaren Flächen (82a-k) seitlich nach innen zu einem mittleren Bereich der Ablenkfläche geneigt sind.

11. Fördersystem nach einem der vorhergehenden Ansprüche, **dadurch gekennzeichnet, daß** die Stützbereiche der Ablenkschuhe durch eine Vielzahl von verbundenen Wandsegmenten (68) mit im wesentlichen der gleichen Dicke gebildet sind und vorzugsweise aus polymerem Material, vorzugsweise Acetalcopolymer, geformt sind.

12. Fördersystem nach einem der vorhergehenden Ansprüche, bei dem jede der Lamellen durch eine Wand mit im allgemeinen planaren oberen und unteren Wandbereichen (30, 32) gebildet ist, die durch Seitenwandbereiche (34, 36) verbunden sind, die Verbindungskanten zwischen den Wandbereichen bilden und das Lagermittel umfassen, das ein Lager zwischen mindestens einer der Verbindungskanten jeder Lamelle und einem Berührungsbereich der Gleitfläche des entsprechenden Ablenkschuhs definieren.

13. Fördersystem nach Anspruch 12, **dadurch gekennzeichnet, daß** das Lagermittel Mittel umfaßt, das eine vergrößerte Radiusfläche (38, 40) an der einen der Verbindungskanten bildet.

14. Fördersystem nach Anspruch 13, **dadurch gekennzeichnet, daß** das Lagermittel Lager (64, 66) zwischen zwei gegenüberliegenden Verbindungskanten und Berührungsbereichen der Gleitfläche bildet.

15. Fördersystem nach einem der vorhergehenden Ansprüche, welches seitliche Stabilisierungsmittel (42, 58) zwischen einem der Wandbereiche jeder der Lamellen und einem Berührungsbereich der Gleitfläche des entsprechenden Ablenkschuhs umfassen, wobei die seitlichen Stabilisierungsmittel Vertikalachsenreaktionskräftepaaren widerstehen.

16. Fördersystem nach Anspruch 15, **dadurch gekennzeichnet, daß** die seitlichen Stabilisierungsmittel einen T-förmigen Bereich (42) aufweisen, der sich von einem der Wandbereiche erstreckt und verschiebbar in einem Schlitz 68 angeordnet ist, der in dem Berührungsbereich der Gleitfläche gebildet ist.

17. Fördersystem nach einem der vorhergehenden Ansprüche, **dadurch gekennzeichnet, daß** der Stützbereich (44) ein Mitnehmerteil (54), das geeignet ist durch die Schienenmitteln erfaßt zu werden, und einen Basisbereich (52) aufweist, der die Gleitfläche zur Befestigung des Mitnehmerteils aufweist, wobei der Basisbereich durch eine Vielzahl von Wandsegmenten (68) gebildet ist, die wabenförmig angeordnet sind.

## Revendications

1. Système de transport (20) présentant une surface de transport se déplaçant longitudinalement, définie par les surfaces les plus élevées d'un ensemble de lames (22) reliées, en relation espacée l'une avec l'autre, en une bande sans fin, un ensemble de sabots de déviation (28), chacun étant monté, de façon à pouvoir être déplacé, sur une des lames (22) pour un déplacement latéral par rapport à la surface de transport ; et des moyens de guidage venant en contact avec les sabots de déviation pour transmettre une force latérale afin de déplacer les sabots de déviation latéralement pour déplacer un produit placé sur la surface de transport, caractérisé en ce que chacune des lames (22) est définie par une paroi formée comme un cylindre comportant une surface extérieure ayant une partie supérieure plane (30) définissant la surface de transport, et chacun des sabots de déviation (28) comporte une partie support (44), comprenant une surface de glissement pratiquement plane (50), entourant entièrement ladite paroi, la surface de glissement ayant pratiquement la même configuration que la surface extérieure de la lame.

2. Système de transport selon la revendication 1, dans lequel le cylindre a une section transversale de forme quadrilatérale, de préférence en forme de parallèlogramme comprenant un côté (30) définissant la partie supérieure plane.

3. Système de transport selon la revendication 1 ou la revendication 2, dans lequel chacune des lames (22) comprend des moyens de montage (96) pour monter les extrémités opposées deladite paroi sur les chaînes, les moyens de montage comprenant, de préférence, un matériau pour amortissement des vibrations entre la paroi et les chaînes et/ou un raccord à compression (98) pour venir en prise avec une surface intérieure deladite paroi.

4. Système de transport selon l'une quelconque des revendications 1 à 3, dans lequel la surface de glissement est définie par un matériau antifriction.

5. Système de transport selon l'une quelconque des revendications 1 à 4, dans lequel chacun des sabots de déviation (28) comprend une partie pour déviation (46) assemblée à la partie support, de préférence par un assemblage en queue d'aronde (72, 88).

6. Système de transport selon la revendication 5, dans lequel les parties pour déviation des sabots de déviation sont définies par un ensemble d'éléments de paroi assemblés (86) ayant pratiquement la même épaisseur et sont, de préférence, moulées à base de matière polymère, de préférence à base de copolymère d'acétal.

7. Système de transport selon la revendication 5 ou la revendication 6, dans lequel la partie pour déviation comprend au moins une surface pour déviation pratiquement verticale (78) sur une extrémité latérale de celle-ci.

8. Système de transport selon la revendication 6 ou la revendication 7, dans lequel la partie pour déviation (46) comprend un ensemble de surfaces contiguës globalement planes (82a à k) s'inclinant vers le bas depuis une saillie supérieure de la surface pour déviation, latéralement vers l'intérieur et longitudinalement vers l'avant ou vers l'arrière.

9. Système de transport selon la revendication 8, lorsqu'elle est dépendante de la revendication 7, comprenant une desdites surfaces pour déviation (78a) et dans lequel les surfaces planes (82a à f) s'inclinent latéralement vers l'intérieur vers une autre extrémité latérale dudit élément pour déviation, opposée à ladite surface pour déviation.

10. Système de transport selon la revendication 8, lorsqu'elle est dépendante de la revendication 7, comprenant une paire de surfaces pour déviation (78a, 78b) sur des extrémités latérales opposées de l'élément pour déviation et dans lequel les surfaces planes (82a à k) s'inclinent latéralement vers l'intérieur vers une partie centrale deladite surface pour déviation.

11. Système de transport selon l'une quelconque des revendications précédentes, dans lequel les parties support des sabots de déviation sont définies par un ensemble d'éléments de paroi assemblés (68) ayant pratiquement la même épaisseur et sont, de préférence, moulées à base de matière polymère, de préférence à base de copolymère d'acétal.

12. Système de transport selon l'une quelconque des revendications précédentes, dans lequel chacune des lames est définie par une paroi ayant des parties de paroi supérieure et inférieure globalement planes (30, 32) reliées par des parties de paroi latérales (34, 36) définissant des bords d'assemblage entre chacune desdites parties de paroi et qui comprennent des moyens d'appui définissant un appui entre au moins un desdits bords d'assemblage de chacune des lames et une partie pour venir en contact deladite surface de glissement du sabot correspondant desdits sabots de déviation.

13. Système de transport selon la revendication 12, dans lequel les moyens d'appui comprennent des moyens définissant une surface de rayon augmenté (38, 40) sur ledit premier desdits bords d'assemblage.

14. Système de transport selon la revendication 13, dans lequel les moyens d'appui définissent des appuis (64, 66) entre deux bords opposés desdits bords d'assemblage et les parties pour venir en contact deladite surface de glissement.

15. Système de transport selon l'une quelconque des revendications précédentes, qui comprend des moyens de stabilisation latérale (42, 58) entre une des parties de paroi de chacune des lames et une partie pour venir en contact de la surface de glissement du sabot correspondant des sabots de déviation, le moyen de stabilisation latérale résistant aux couples de forces de réaction suivant un axe vertical.

16. Système de transport selon la revendication 15, dans lequel le moyen de stabilisation latérale comprend une partie en forme de T (42) se prolongeant depuis l'une des parties de paroi et étant positionnée de façon coulissante dans une rainure (58) définie dans la partie venant en contact, de la surface de glissement.

17. Système de transport selon l'une quelconque des revendications précédentes, dans lequel la partie support (44) comprend une partie guidée (54) conçue pour être mise en prise par ledit moyen de guidage et une partie de base (52) comprenant la surface de glissement, pour montage de la partie guidée, la partie de base étant définie par un ensemble d'éléments de paroi (68) agencés à la manière de nids d'abeilles.
